Europäisches Patentamt

European Patent Office

Office européen des brevets

(11) Publication number: **0 096 213**
**B1**

(12) # EUROPEAN PATENT SPECIFICATION

(45) Date of publication of patent specification: **09.08.89**

(21) Application number: **83104230.4**

(22) Date of filing: **29.04.83**

(51) Int. Cl.⁴: **G 01 C 19/64,** G 02 B 6/28

(54) **Optical fiber gyroscope.**

(30) Priority: **10.06.82 JP 100106/82**
**09.06.82 JP 98996/82**

(43) Date of publication of application:
**21.12.83 Bulletin 83/51**

(45) Publication of the grant of the patent:
**09.08.89 Bulletin 89/32**

(84) Designated Contracting States:
**DE FR GB NL SE**

(56) References cited:
**EP-A-0 018 873**
**DE-A-2 851 696**
**US-A-4 273 445**

**PATENTS ABSTRACTS OF JAPAN, vol. 2, no.
84, 8th July 1978, page 3556 E 78 & JP - A - 53
47 851**

**PATENTS ABSTRACTS OF JAPAN, vol. 3, no. 9,
26th January 1979, page 40 E86 & JP - A - 53
135 652**

(73) Proprietor: **SUMITOMO ELECTRIC INDUSTRIES
LIMITED
No. 15, Kitahama 5-chome Higashi-ku
Osaka-shi Osaka 541 (JP)**

(72) Inventor: **Yoshida, Kenichi
c/o Osaka Works of Sumitomo Electric Ind. Ltd.
1-3, Shimaya 1-chome Konohana-ku Osaka (JP)**
Inventor: **Yokohara, Takashi
c/o Osaka Works of Sumitomo Electric Ind. Ltd.
1-3, Shimaya 1-chome Konohana-ku Osaka (JP)**
Inventor: **Ono, Kimizo
c/o Osaka Works of Sumitomo Electric Ind. Ltd.
1-3, Shimaya 1-chome Konohana-ku Osaka (JP)**
Inventor: **Nishiwaki, Yoshikazu
c/o Osaka Works of Sumitomo Electric Ind. Ltd.
1-3, Shimaya 1-chome Konohana-ku Osaka (JP)**
Inventor: **Tsuno, Koichi
c/o Osaka Works of Sumitomo Electric Ind. Ltd.
1-3, Shimaya 1-chome Konohana-ku Osaka (JP)**

(74) Representative: **Glawe, Delfs, Moll & Partner
Patentanwälte
Postfach 26 01 62 Liebherrstrasse 20
D-8000 München 26 (DE)**

**EP 0 096 213 B1**

(58) References cited:
**APPLIED PHYSICS LETTERS, vol. 30, no. 9, 1st
May 1977, pages 478-480, American Institute of
Physics, New York, US; S.EZEKIEL et al.:
"Passive ring resonator laser gyroscope"**

## Description

The present invention relates to an optical fiber gyroscope as it is outlined in the preamble part of claim 1. An optical fiber gyroscope includes a loop of an optical fiber formed by looping an optical fiber many times, and is adapted to transmit a laser beam clockwise and counterclockwise through the optical fiber loop to detect the phase difference between them, thereby determining the angular velocity of a moving body in which the gyroscope is mounted.

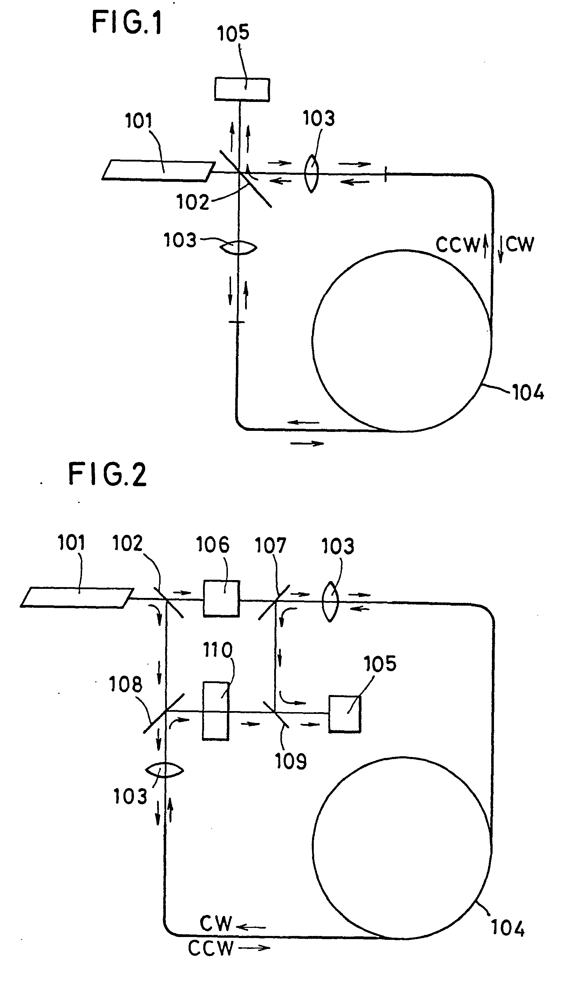

Fig. 1 is a schematic view showing a fundamental structure of a conventional optical fiber gyroscope. A coherent beam from a laser 101 is divided by a beam splitter 102 into two beams, which are projected into the ends of an optical fiber loop 104 through lenses 103. One of the two beams transmits through the optical fiber loop 104 clockwise and the other does counterclockwise. The optical fiber loop 104 comprises a single mode optical fiber coiled in a plurality of turns. The two beams coming back from the optical fiber loop are projected into an optical detector 105 through the lenses 103 and the beam splitter 102. The path of the clockwise (CW) beam is identical to that of the counterclockwise (CCW) beam if the optical fiber loop 104 is at standstill. There will be no phase difference between the CW beam and the CCW beam. But, if it rotates at an angular velocity $\Omega$, there will be some phase difference therebetween. The phase difference $\Delta\phi$ is given by the following formula:

$$\Delta\phi = \frac{8\pi A\Omega}{\lambda C} \qquad (1)$$

wherein C represents the velocity of light, $\lambda$ the wave length of the laser beam, and A the area enclosed by the optical fiber loop.

Assuming that the amplitude of the CW beam is identical to that of the CCW beam and the phase difference therebetween is $\Delta\phi$, the optical detector 105 generates an output proportional to the square of the sum of the amounts of the two beams. Thus, the output I(t) is given by the following proportional formula:

$$I(t) \propto Eo^2(1 + \cos\Delta\phi) \qquad (2)$$

wherein Eo represents the amplitude of the two beams. Thus, the output is proportional to $\cos\Delta\phi$. By determining the phase difference $\Delta\phi$ from the output, the angular velocity $\Omega$ of the optical fiber loop can be known.

Such an optical fiber gyroscope has a poor sensitivity in the low angle range (when $\Delta\phi$ is small) because the output varies with $(1 + \cos\Delta\phi)$. A further difficulty is that the S/N ratio is low since the variation of the DC component is picked up.

Fig. 2 is a schematic view of another type of the conventional optical fiber gyroscope in which the beam path is partially separated and one of the beams is subjected to amplitude modulation to overcome the abovesaid difficulties. An amplitude modulation element 106 is added into the path of the CW beam. In order to separate the CW beam from the CCW beam, beam splitters 107, 108 and 109 are additionally provided so as for four beam splitters to form a rectangle. The CW beam is subjected to amplitude modulation by the element 106, condensed by a lense 103, and projected into the optical fiber loop 104. After passing through another lense 103, it enters the beam path separated by the beam splitter 108. A phase shifter 110 is provided in the separated beam path so as to impart a phase difference of $\pi/2$.

The amount of the CW beam can be represented by

$$Eo(1 + m\sin\omega mt)e^{i(\omega t + \delta\phi) + i\,\pi/2} \qquad (3)$$

That of the CCW beam can be represented by

$$Eoe^{i\omega t} \qquad (4)$$

The output I(t) of the beam detector, which is proportional to the square of the sum of (3) and (4), consists of the DC component, the component of frequency $\omega m$ and that of the frequency $2\omega m$.

The component of frequency $\omega m$ can be represented by

$$I(t) = 2mEo^2(1 - \sin\Delta\phi)\sin\omega mt \qquad (5)$$

The phase difference $\Delta\phi$ and the angular velocity $\Omega$ can be determined from the comonent $\omega m$.

In the conventional optical fiber gyroscopes as described above, separate optical components such as a laser, beam splitters and lenses were combined together. Thus, it was difficult to maintain mutual alignment of the optical components even if these components are mounted on a plate or in a casing by means of holders or stands so as not to move. The relative position between the optical components can vary even if they are fixed separately. If it is disturbed, the coupling efficiency between the optical fiber and the other optical components varies so that the output of the beam detector will drift. Also, the area for which the CW and CCW beams overlap on the surface of the beam detector may vary, thus causing the output of the beam detector to drift. These difficulties are attributable to the fact that relative positions and alignment between the optical components are not securely fixed. It is difficult to differentiate the drift due to such an instability of the optical system from the variation of output with $\cos\Delta\phi$, and thus to detect accurately the phase difference.

An optical fiber gyroscope according to the preamble part of claim 1 is described in EP—A— 0 018 873. This device comprises a plurality of beam-splittering parallelepipeds which are bonded together. The ends of the optical fiber are connected to this assembly by means of rectangular glass blocks which are bonded to the parallelepipeds and which are guiding the ends of the opticals fibers to the respective side faces thereof. As the arrangement of the beam splitters and the opticals fiber is fixed, the mechanical stability of the assembly is increased. However, other components such as the beam source and the beam detector are arranged separately, and therefore the above mentioned problems are still present.

DE—A—28 51 696 shows a coupling element for optical fibers in which a detector element is glued to a beam splitter, and from "Passive ring resonator laser gyroscope", Applied Physics letters, Vol. 30, No. 9, 1st May 1977, pp. 478—480 it is known to use optical isolators in optical gyroscopes.

It is the object of the present invention to provide an optical fiber gyroscope which has a highly stabilized optical system and which shows a good signal-to-noise ratio.

This object is achieved by an optical fiber gyroscope according to claim 1. The dependent claims are related to further development of the invention.

In the present invention, optical components are bonded to glass blocks and the glass blocks are bonded to one another to form a compact, lightweight and highly reliable optical system. Therefore, mutual alignment and relative distance between the optical components cannot be disturbed. This assures high reliability and no noise. Further, this system makes it possible to minimize the length of beam track and makes the gyroscope compact and light-weight. Also, the use of modulated beam signal increases the S/N ratio.

Other objects and features of the present invention will become apparent from the following description taken with reference to the accompanying drawings, in which:

Fig. 1 is a schematic view of a conventional optical fiber gyroscope;

Fig. 2 is a schematic view of another type of conventional optical fiber gyroscope;

Fig. 3 is a schematic view of a gyroscope having a good mechanical stability;

Fig. 4 is a schematic view of a gyroscope using an optical isolator;

Fig. 5 is a perspective view of an embodiment using a phono-optical amplitude modulator;

Fig. 6 is a perspective view of an embodiment using an electro-optical amplitude modulator;

Fig. 7 is a perspective view of an embodiment using a magneto-optical amplitude modulator; and

Fig. 8 is a schematic view of an embodiment using a frequency shift modulator.

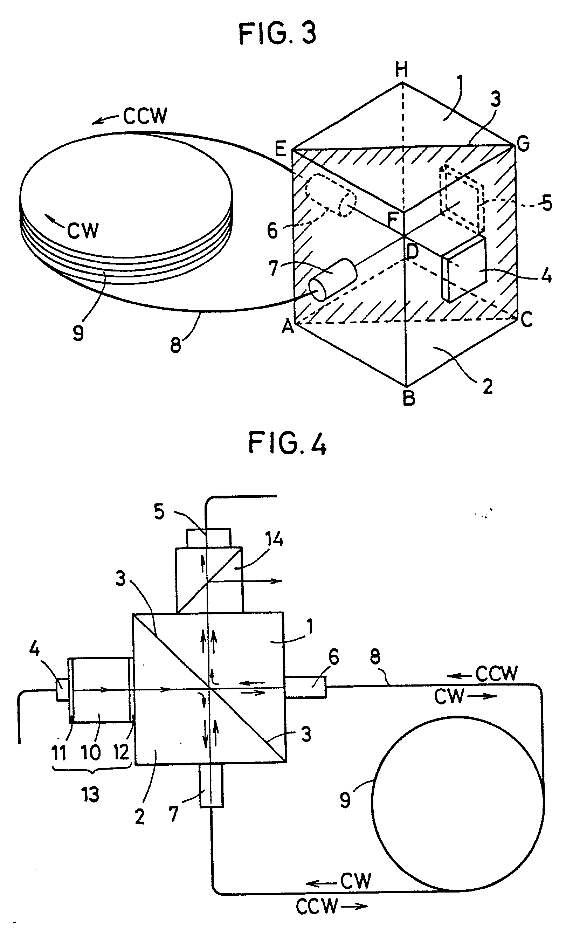

Referring to Fig. 3 showing a gyroscope having an increased mechanical stability, glass blocks 1, 2 are transparent triangular prisms having a right-angled equilateral triangular base. Two such prisms are combined together to form a rectangular parallelepiped. The glass block 1 is a pentahedron having a triangular base ACD, a triangular upper face EGH, square lateral faces ADHE and CDHG, and a square oblique face ACGE. The face ACGE defining the boundary between the blocks 1, 2 is coated with metal film such as aluminum or silver to give a transmissivity of 50%. The metal coated layer transmits part of the beam and reflects the rest to serve as a beam splitter 3 which is not an independent optical component but a coated surface on the glass block 1.

After the oblique face of the glass block 1 has been coated with metal film by vapor deposition or sputtering, the glass blocks 1, 2 are bonded together. To the square side BCGF of the glass block 2 is bonded a light emitting element 4 comprising a semiconductor laser. To the adjacent side CDHG of the glass block 1, a light receiving element 5 such as a photodiode is bonded. Lenses 6 and 7 are bonded to the side ADHE of the glass block 1 and to the side ABFE of the glass block 2, respectively.

The lenses 6, 7 are cylindrical rod lenses having a distribution of the square of the refractivity in a radial direction. The light emitting element 4 and the light receiving element 5 are aligned with the lenses 6, 7, respectively. The axes of the lenses 6, 7 are in a plane normal to the beam splitter 3 and are symmetrical with respect to it. The transmissivity and reflexivity of the beam splitter 3 are set at 50% relative to the laser beam from the light emitting element 4.

The light emitting element 4, light receiving element 5 and lenses 6, 7 are bonded to the glass blocks 1, 2 with an adhesive having optical uniformity, high transmissivity and environmental resistance such as epoxy resin and balsam.

The light emitting and receiving elements, beam splitter and lenses form an integrated unit. The optical fiber 8 is an elongated single mode fiber coiled many times into an optical fiber loop 9. The ends of the optical fiber 8 are connected to the lenses 6, 7.

The gyroscope of Fig. 3 is the same as the conventional optical fiber gyroscope of Fig. 1 in function. A coherent laser beam from the light emitting element 4 is divided into two beams by the beam splitter 3. One of the beams advances straightly, condensed by the lense 6, projected onto the optical fiber 8, and transmitted counterclockwise through the optical fiber loop 9. The other beam reflected by the beam splitter 3 is projected onto the optical fiber 8 through the lense 7 and transmitted clockwise through the optical fiber loop 9.

The CCW beam comes back to the glass block 2 through the lense 7, passes through the beam splitter 3 and is projected onto the light receiving element 5. The CW beam returned to the glass block 1 through the lens 6 is reflected by the beam splitter 3 and projected onto the light receiving element 5.

If the optical fiber loop 9 is at standstill, there is no phase difference between the CW beam and the CCW beam. If it rotates at an angular velocity $\Omega$, a phase difference $\Delta\phi$ arises therebetween. Since

the output of the light receiving element 5 is proportional to the square of the sum of the two beams, it is proportional to cosΔφ. The angular velocity can be determined by finding Δφ from the output value.

The gyroscope of Fig. 3 is the most basic homodyne type.

Fig. 4 shows another optical fiber gyroscope using an optical isolator. The basic structure of the optical system is the same as the gyroscope of Fig. 3. A beam splitter 3 is provided between the glass blocks 1, 2 and a light emitting element 4 and a light receiving element 5 are provided so as to be opposed to the lenses 6, 7, respectively. Between the light emitting element 4 and the glass block 2 there is bonded an isolator 13 comprising a Faraday element 10 held between polarizing plates 11, 12.

In the embodiment of Fig. 3, part of the beam from the light emitting element 4 is reflected by the end faces of the lenses 6, 7 or the optical fiber, going back to the same element. Part of the beam transmitted through the optical fiber loop also returns to the light emitting element 4. Though the light emitting element is a semiconductor laser, its oscillation will be unstable if there is such a return beam. The isolator 13 is interposed so as to intercept any return beam.

Between the light receiving element 5 and the glass block 1 there is provided a polarized beam splitter 14. The output can fluctuate if the polarized wave front of the beam propagated through the optical fiber fluctuates at random. The polarized beam splitter 14 is provided in order to obviate this impediment.

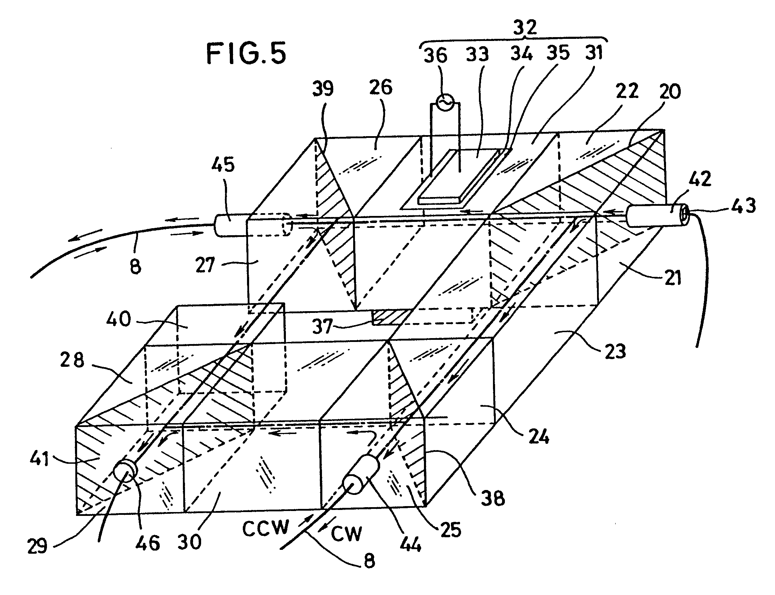

Figs. 5—8 show embodiments of the invention in which one of the two beams is modulated.

Referring to Fig. 5, a U-shaped block assembly is formed by combining ten glass blocks 21—30. The glass blocks are in the shape of a triangular or quadrangular prism, and they are bonded to one another with a highly transmissive and optically uniform adhesive such as epoxy resin and balsam.

The first and second glass blocks 21 and 22 are triangular prisms having a base in the shape of a right-angled equilateral triangle. Their oblique faces are coated with a thin film of metal such as silver and aluminum so that both the transmissivity and reflexibility thereof will be 50%. This metal film functions as a beam splitter 20.

To one side of the second glass block 22 is bonded an ultrasonic propagation medium 31 of a material such as fused silica, $LiNbO_3$, and yttrium aluminum garnet. The propagation medium 31 is a transparent rectangular parallelepiped to the top of which an ultrasonic transducer 32 comprising an electrode 33, a piezo-electric element 34 and an electrode 35 is secured. A drive voltage of a frequency ωm is applied to between the electrodes 33, 35 from a power supply 36. The piezo-electric element 34 generates acoustic waves by the piezoelectric effect. As the ultrasonic transducer, e.g. crystal, barium titanate, $Pb(Zr_xTi_{1-x})O_3$, or $Bi_{12}SiO_{20}$ is used.

The acoustic waves of a frequency ωm generated by the ultrasonic transducer travel through the propagation medium 31 from top to bottom until they are absorbed by an ultrasonic absorber 37. The propagation medium 31 has a photoelastic effect. A periodic change of the refractive index arises in the propagation medium in the direction of travel of the acoustic waves, causing the beam travelling normally to the direction of the acoustic waves to diffract. The direction of diffraction changes according to a frequency ωm. This means that the intensity of the beam is subjected to amplitude modulation at a frequency ωm.

The ultrasonic transducer 32 used in this embodiment is an audio-optical one. A third glass block 23 is bonded to the first glass block 21 in a position opposite to the ultrasonic transducer 32. It is a rectangular parallelepiped. To the other end of the third glass block 23 is bonded a fourth glass block 24 in the shape of a right-angled equilateral triangular prism.

A fifth glass block 25 in the shape of a right-angled equilateral triangular prism is bonded to the oblique face of the fourth glass block 24 so that a rectangular parallelepiped is formed. A beam splitter 38, which is a coated metal film, is provided on the interface between the fourth glass block 24 and the fifth glass block 25.

A sixth glass block 26 and a seventh one 27 are in the shape of right-angled equilateral triangular prisms, too. Similarly, a beam splitter 39 which is a coated metal film is provided on the surface inclined at 45°. One side of the sixth glass block 26 is bonded to the end of the propagation medium 31 so that the glass blocks 21, 22, the propagation medium 31 and the glass blocks 26, 27 are in alignment with one another.

There is a space left between the seventh glass block 27 and an eighth glass block 28 and a phase plate 40 is bonded to the top of the eighth glass block 28. The phase plate serves to shift the phase of beam by π/2. The eighth and ninth glass blocks 28, 29 are right-angled equilateral triangular prisms, and are bonded together with a beam splitter 41 therebetween. The fifth glass block 25 and the ninth glass block 29 are connected to each other through a tenth glass block 30. The four beam splitters 20, 38, 39, 41 are disposed radially from the center of the glass block assembly.

A lens 42 is bonded to one side of the first glass block 21. It is a cylinrical lens of a refractivity distributed type in which its refractivity continuously varies in a radial direction. A laser diode 43 is attached to the other end of the lens. The lens 42 changes the beam from the laser diode 43 into a parallel beam.

Part of the beam from the lens 42 is reflected by the beam splitter 20 and makes straight advances through the glass blocks 23, 24, and 25. Another lens 44 is bonded to one side of the fifth glass block 25 so as to be aligned with said beam. The rest of the beam from the laser diode 43 transmits through the beam splitter 20 and makes a straight advance through the second glass block 22, propagation medium 31, sixth glass block 26 and seventh glass block 27. A lens 45 is bonded to one side of the seventh glass block 27 so as to be aligned with the beam.

To the lenses 44, 45 are secured the ends of the optical fiber loop comprising a single mode optical fiber 8 having a core and a clad. The parallel laser beam is condensed by the lenses 44, 45 and projected onto the ends of the optical fiber 8. To one side of the ninth glass block 29 is bonded a photodiode 46 serving as a beam detector.

The operation of the optical fiber gyroscope of Fig. 5 will be described below in detail.

The coherent beam energized by the laser diode 43 is projected into the first glass block 21 where it is divided into two beams by the beam splitter 20. The reflected beam travels through the third, fourth and fifth glass blocks 23, 24, and 25. The laser beam has been collimated into parallel beam by the collimating lens 42. The beam is condensed by the lens 44 attached to the fifth glass block 25 and projected into the optical fiber 8. The beam turns clockwise in the loop of the optical fiber and returns to the seventh glass block 27 through the lens 45. It is reflected by the beam splitter 39, leaves the glass block 27 and passes through the space, the phase plate 40 and the glass blocks 28, 29 until it is detected by the photodiode 46. The phase is shifted by $\pi/2$ when the beam passes through the phase plate 40.

The rest of the beam from the laser diode transmits through the beam splitter 20, the second glass block 22 and the propagation medium 31. The direction of propagation of the ultrasonic waves is normal to the direction of advance of the beam. Since the propagation medium 31 has a photoelastic effect, its refractivity varies periodically so that the laser beam is diffracted. The diffraction angle vertically changes according to the frequency $\omega m$ of the ultrasonic waves.

The diffracted beam travels through the sixth glass block 26, beam splitter 39 and seventh glass block 27 until it is projected into the optical fiber 8 through the lens 45. Since the laser beam is diffracted, the amount of beam passing through the lens 45 vibrates at a frequency $\omega m$. This means that the beam projected into the optical fiber 8 has been subjected to the following amplitude modulation.

$$(1+m\sin^{\omega mt}) \qquad (6)$$

The modulated beam passes counterclockwise through the loop of the optical fiber 8 and goes back to the fifth glass block 25 through the lens 44. This beam is reflected by the beam splitter 38, passes through the glass blocks 30 and 29 until it is reflected by the beam splitter 41 and projected into the photodiode 46. If the loop of the optical fiber 8 rotates at an angular velocity $\Omega$, a phase difference $\Delta\phi$ given by the formula (1) arises.

The above-described embodiment is the same as the optical fibre gyroscope shown in Fig. 2 in that the phase is shifted by $\pi/2$ by the phase plate, that the beam is amplitude modulated, and that the $\omega m$ component of the output is ideally represented by the formula (5).

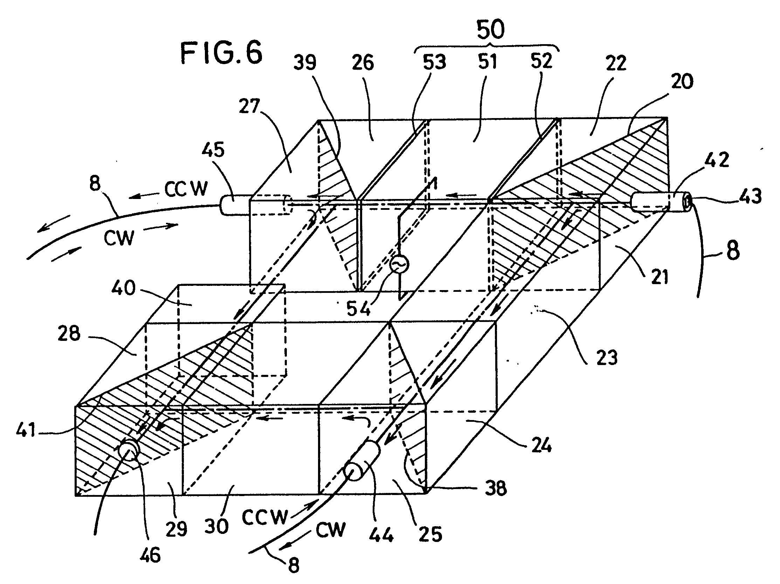

Fig. 6 shows an embodiment in which an amplitude modulation element making use of an electro-optical effect is employed. In this embodiment, too, the component of the modulation frequency $\omega m$ alone is picked up by subjecting one of two beams to amplitude modulation. The amplitude modulation element 50 comprises an electro-optical material 51 sandwiched between a polarizer 52 and an analyzer 53. An electrode is provided on the top and bottom of the electro-optical material 31 and a modulating voltage is applied from a power supply 54. The electro-optical material may be selected from among the crystals of $Bi_{12}SiO_{20}$, $Bi_{12}GeO_{20}$, $LiNbO_3$, etc.

The laser beam is rectilinearly polarized by the polarizer 52, and its polarized wave becomes elliptical in proportion to the modulating voltage. Since this beam passes through the analyzer 53, it is amplitude modulated. This means that the electro-optical material, polarizer and analyzer function as an amplitude modulation element.

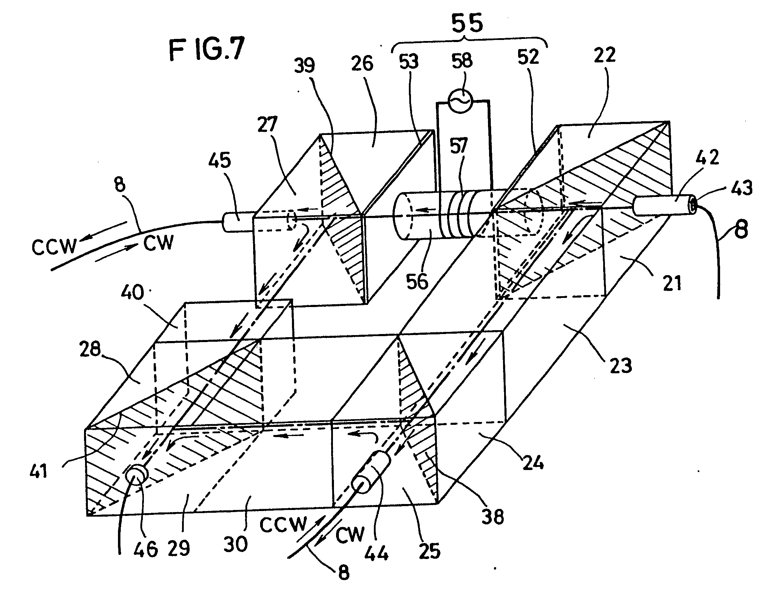

Fig. 7 shows an embodiment employing a magneto-optical amplitude modulator. An amplitude modulator 55 includes a magneto-optical material 56, a coil 57 wound therearound, a power supply 58 for supplying an AC current, a polarizer 52 and an analyzer 53 provided on both ends of the material 56. The magneto-optical material may be crystals of yttrium iron garnet or gadolinium gallium garnet. When the coil 57 is energized, a magnetic field is generated in the magneto-optical material 56. After the beam has been rectilinearly polarized by the polarizer 52, its polarized wave front rotates by the magneto-optical effect. Since the beam in such a state passes through the analyzer, its amplitude decreases in proportion to the rotation of the polarized wave front. Thus, these members as a whole function as a beam amplitude modulator.

Instead of the amplitude modulation, other types of modulation such as frequency modulation and frequency shift may be used.

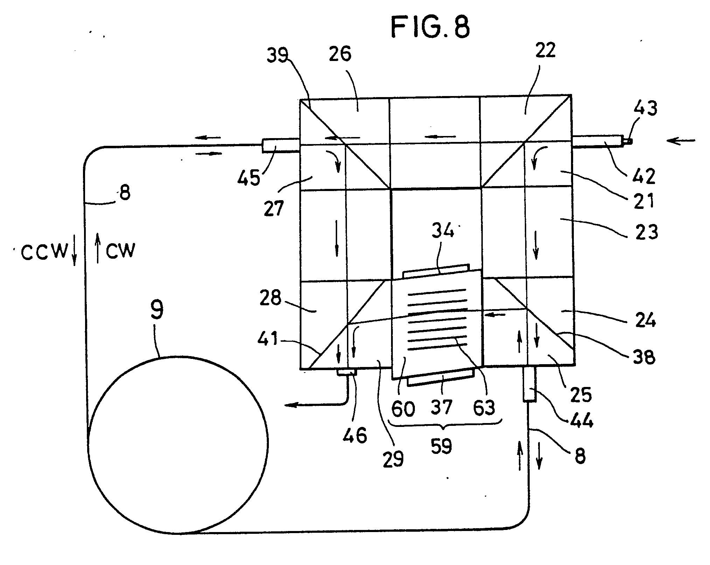

An embodiment using frequency shift will be described below with reference to Fig. 8.

A frequency shift modulator 59 comprises a propagation medium 60 having slightly oblique sides, said medium being bonded between two glass blocks 25 and 29, an ultrasonic transducer 34 and an ultrasonic absorber 37 mounted on the oblique sides. The propagation medium 60 transmits the ultrasonic waves in a slightly oblique direction. The propagation medium should be made of a material having a photoelastic effect.

Propagation of ultrasonic waves is effected by the continuation of elastic deformation. Since the refractivity varies with the elastic deformation, a diffraction grating 63 is practically formed in the propagation medium. The laser beam is diffracted by the diffraction grating and changes the direction of its travel. Simultaneously, the frequency is shifted by $\omega m$. In effect, if the angle frequency of the beam is represented by ω, that of the modulated beam is represented by (ω+ωm). In this embodiment, no phase plate is used.

The clockwise beam can be represented by

$$Eoe^{i\omega t} \qquad (7)$$

while the counterclockwise beam can be represented by

$$Eoe^{i(\omega+\omega m)t+i\Delta\Phi} \qquad (8)$$

The photodiode as the beam detector gives an output proportional to the square of the sum of these two values. The ωm component It) of the output is represented as follows.

$$I(t) \propto \cos(\omega mt + \Delta\phi) \qquad (9)$$

From this signal, the phase difference $\Delta\phi$ can be detected by the zero method. The angular velocity $\Omega$ can be measured from the phase difference as in the foregoing embodiments. As in the third embodiment of Fig. 5, the propagation medium may be made of fused silica, $LiNbO_3$ or yttrium aluminum garnet, which have an audio-optical effect.

The optical fiber gyroscope according to the present invention can be used:

1) on automobiles, ships and airplanes.

2) as a position sensor for determining the position of a moving body such as a robot.

## Claims

1. An optical gyroscope comprising a beam emitting means (43),

a loop of an optical fiber (8),

a plurality of pairs of triangular glass blocks (21, 22; 24, 25; 26, 27; 28, 29) in the shape of right-angled equilateral triangular prisms bonded together to form rectangular beam-splitting parallelepipeds, each of said pairs of triangular glass blocks (21, 22; 24, 25; 26, 27; 28, 29) having its oblique interface coated with metal to function as a beam splitter (20, 38, 39, 41), a plurality of glass blocks (23, 30) in the shape of a rectangular parallelepiped bonded to said rectangular beam-splitting parallelepipeds said pluralities of blocks forming a unitary glass block assembly providing two beam paths,

a first lens (42) bonded to the side of one of said beam-splitting parallelepipeds for introducing an emitted beam; and a beam detector means (46), characterized in that

each of said rectangular glass blocks (23, 30) is arranged between two of said beam-splitting parallelepipeds,

a pair of lenses (44, 45) is provided each being bonded to another one of said beam-splitting parallelepideds, the ends of said fiber (8) being connected to said lenses (44, 45),

said beam emitting means (43) is bonded to said first lens (42) and in alignment with one of said pair of lenses (44, 45),

said beam detector means (46) is bonded to still another one of said beam-splitting parallelepipeds, and modulator means (32) are arranged in one of said two beam paths for modulating the beam transmitted through one of said beam splitters.

2. An optical fiber gyroscope as claimed in claim 1, characterized in that said modulator means comprises a propagation medium (31) having a phono-optical effect and an ultrasonic transducer bonded to said propagation medium.

3. An optical fiber gyroscope as claimed in claim 1, characterized in that said modulator means comprises an electro-optical material sandwiched between a polarizer and an analyzer.

4. An optical fiber gyroscope as claimed in claim 1, characterized in that said modulator means comprises a magneto-optical material having a coil (57) wound therearound and held between a polarizer and an analyzer.

## Patentansprüche

1. Optisches Gyroskop mit strahlemittierenden Mitteln (43), einer Schleife einer optischen Fiber (8), einer Anzahl von Paaren von dreieckigen Glasblöcken (21, 22; 24, 25; 26, 27; 28, 29) in Form von rechtwinkligen gleichschenkligen dreieckigen Prismen, die miteinander verbunden sind, um rechteckige strahlteilende Parallelepipede zu bilden, wobei bei jedem der Paare der dreieckigen Glasblöcke (21, 22; 24, 25; 26, 27; 28, 29) die schräge Schnittfläche mit Metall beschichtet ist, um als Strahlteiler (20, 38, 39, 41) zu dienen, einer Anzahl von Glasblöcken (23, 30) in Form von rechteckigen Parallelpipeden, die mit den rechteckigen strahlteilenden Epipeden verbunden sind, wobei die Anzahlen von Blöcken eine einheitliche Glasblockanordnung bilden und zwei Strahlwege schaffen,

einer ersten Linse (42), die mit einer Seite einer der strahlteilenden Parallelepipede zur Einführung eines emittierten Strahls verbunden ist und Strahldetektormitteln (46), dadurch gekennzeichnet, daß

jeder der rechtwinkligen Glasblöcke (23, 30) zwischen zwei der Strahlteilenden Parallelepipede angeordnet ist,

ein Paar Linsen (44, 45) vorgesehen ist, wobei jede mit einem anderen der strahlteilenden Parallelepipede verbunden ist, die Enden der Fiber (8) an die Linsen (44, 45) angekoppelt sind und das strahlemittierende Mittel (43) mit der ersten Linse (42) verbunden ist und in Ausrichtung mit einer des Paares von Linsen (44, 45) ist,

daß das Strahldetektormittel (46) mit einem weiteren der strahlteilenden Parallelepipede verbunden ist und daß Modulatormittel (32) in einem der beiden Strahlwege angeordnet sind und zur Modulierung des durch einen der Strahlteiler transmittierten Strahls.

2. Optisches Fibergyroskop nach Anspruch 1, dadurch gekennzeichnet, daß das Modulatormittel ein Ausbreitungsmedium (31) mit einem photo-optischen Effekt und einen Ultraschallumformer aufweist, der mit dem Ausbreitungsmedium verbunden ist.

3. Optisches Fibergyroskop nach Anspruch 1, dadurch gekennzeichnet, daß das Modulatormittel ein elektrooptisches Material aufweist, das zwischen einem Polarisator und einem Analysator geschichtet ist.

4. Optisches Fibergyroskop nach Anspruch 1, dadurch gekennzeichnet, daß das Modulatormittel ein magnetooptisches Material mit einer darum herumgewickelten Spule (57) aufweist, das zwischen einem Polarisator und einem Analysator gehalten ist.

**Revendications**

1. Gyroscope optique comprenant:
des moyens d'émission de faisceau (43),
une boucle d'une fibre optique (8),
une pluralité de paires de blocs de verre triangulaires (21, 22; 24, 25; 26, 27; 28, 29) sous la forme de prismes à section en triangle rectangle isocèle, liés les uns aux autres pour former des parallèlépipèdes rectangulaires de séparation de faisceau, chacune desdites paires de blocs de verre triangulaires (21, 22; 24, 25; 26, 27; 28, 29) ayant sont interface oblique revêtue de métal pour fonctionner comme séparateur de faisceau (20, 38, 39, 41),
une pluralité de blocs de verre (23, 30) sous la forme d'un parallèpipède rectangulaire liés auxdits parallèlépipèdès rectangulaires de séparation de faisceau, lesdites pluralités de blocs constituant un ensemble unitaire de blocs de verre réalisant deux chemins de faisceau,
une première lentille (42) liée à la face d'un desdits parallélépipèdes de séparation de faisceau, pour introduire un faisceau d'émission,

et des moyens de détection de faisceau (46), caractérisé en ce que
chacun desdits blocs de verre rectangulaires (23, 30) est placé entre deux desdits parallépipèdes de séparation de faisceau,
deux lentilles (44, 45) sont prévues, chaque lentille étant liée à un autre desdits parallèlépipèdes de séparation de faisceau, les extrémités de ladite fibre (8) étant connectées auxdites lentilles (44, 45),
lesdits moyens d'émission de faisceau (43) sont liés à ladite première lentille (42) et en alignement avec l'une desdites deux lentilles (44, 45),
lesdits moyens de détection de faisceau (46) sont liés à encore un autre desdits parallèlépipèdes de séparation de faisceau, et
des moyens de modulation (32) sont prévus dans l'un des deux chemins de faisceau pour moduler le faisceau transmis à travers l'un desdits séparateurs de faisceau.

2. Gyroscope à fibre optique suivant la revendication 1, caractérisé en ce que lesdits moyens de modulation comprennent un élément de propagation (31) ayant un effet phono-optique, et un transducteur ultrasonique lié audit élément de propagation.

3. Gyroscope à fibre optique suivant la revendication 1, caractérisé en ce que lesdits moyens de modulation comprennent une matière électrooptique interposée entre un polariseur et un analyseur.

4. Gyroscope à fibre optique suivant la revendication 1, caractérisé en ce que lesdits moyens de modulation comprennent une matière magnétooptique autour de laquelle est enroulée une bobine (57) et tenue entre un polariseur et un analyseur.

FIG.1

105

101

103

102

103

CCW CW

104

FIG.2

101  102  106  107  103

110

108  105

103  109

104

CW

CCW

# FIG. 3

# FIG. 4

FIG.5

FIG.6

FIG.7

EP 0 096 213 B1

# FIG.8

6